# EUROPEAN PATENT APPLICATION

(11) **EP 3 686 863 A1**
(43) Date of publication of application: **29.07.2020**
(21) Application number: 17925952.8
(22) Date of filing: 20.09.2017
(51) Int. Cl.: G08G 1/16, B60W 30/00, B60W 40/09

(54) **METHOD FOR LEARNING TRAVEL CHARACTERISTICS, AND TRAVEL ASSISTANCE DEVICE**

(71) Applicant: Nissan Motor Co., Ltd., Yokohama-shi, Kanagawa 221-0023 (JP)
(72) Inventor: JANG Hwaseon, Atsugi-shi Kanagawa 243-0123 (JP); HIRAMATSU Machiko, Atsugi-shi Kanagawa 243-0123 (JP); SUNDA Takashi, Atsugi-shi Kanagawa 243-0123 (JP)
(74) Representative: Grünecker Patent- und Rechtsanwälte PartG mbB
(86) International application number: PCT/JP2017/033924
(87) International publication number: WO 2019/058462

(57) **Abstract**

According to a method for learning travel characteristics and a travel assistance device according to the present invention, in a vehicle capable of switching manual driving by a driver and autonomous-driving, continuity of driving characteristics is determined based on travel data during manual driving by a driver, and a start time and an end time of learning target data, being a learning target of the driving characteristics of the travel data, are set by using a determination result of the continuity.

## Description

### TECHNICAL FIELD

The present invention relates to a travel assistance method and a travel assistance device of a vehicle.

### BACKGROUND ART

Patent Literature 1 discloses that when learning based on a driving operation of a driver at the time of manual driving is to be performed, learning is performed designating a trip, which is a period since start of the driving operation of a vehicle by the driver until finishing the driving operation, as a unit and at the time of autonomous-driving, a driving style suitable for each individual is provided with respect to a plurality of drivers.

### CITATION LIST

### PATENT LITERATURE

Patent Literature 1: Japanese Patent Laid-Open Publication No. 2013-122653

### SUMMARY OF INVENTION

### TECHNICAL PROBLEM

However, in the example disclosed in Patent Literature 1, even if driving characteristics of a driver change in the middle of the trip due to a change of a motivation of the driver during driving, the driving characteristics of the driver is learned in a unit of trip. Therefore, there has been a problem that the learning accuracy decreases.

The present invention has been made in view of such conventional problems. It is an object of the present invention to provide a travel assistance method and a travel assistance device of a vehicle, which can prevent a decrease in learning accuracy when driving characteristics of a driver change in the middle of a trip.

### SOLUTION TO PROBLEM

In order to solve the above problems, a travel assistance method and a travel assistance device according to one aspect of the present invention determines the continuity of driving characteristics based on travel data during manual driving by a driver, and sets a start time and an end time of learning target data, being a learning target of the driving characteristics of the travel data by using a determination result of the continuity.

### ADVANTAGEOUS EFFECTS OF INVENTION

According to the present invention, learning target data can be managed and learned for each of a plurality of different driving characteristics of the same driver. Therefore, in each of the driving characteristics, a sense of discomfort provided to an occupant can be suppressed.

### BRIEF DESCRIPTION OF DRAWINGS

[Fig. 1] Fig. 1 is a block diagram illustrating a configuration of a travel assistance device and peripheral devices thereof according to an embodiment of the present invention.
[Fig. 2] Fig. 2 is a flowchart illustrating a process procedure of generating learning-target data performed by the travel assistance device according to the embodiment of the present invention.
[Fig. 3] Fig. 3 is a schematic diagram illustrating a relation between learning-target data and a switching event in the embodiment of the present invention.
[Fig. 4] Fig. 4 is a schematic diagram illustrating a relation between the learning-target data and a stoppage time of a vehicle in the embodiment of the present invention.
[Fig. 5] Fig. 5 is a schematic diagram illustrating a relation between the learning-target data and an occurrence of a variation in the embodiment of the present invention.
[Fig. 6] Fig. 6 is a schematic diagram illustrating a relation between the learning-target data and a stoppage time of the travel assistance device in the embodiment of the present invention.

### DESCRIPTION OF EMBODIMENTS

Embodiments of the present invention are described below with reference to the accompanying drawings.

### [Configuration of driving control system]

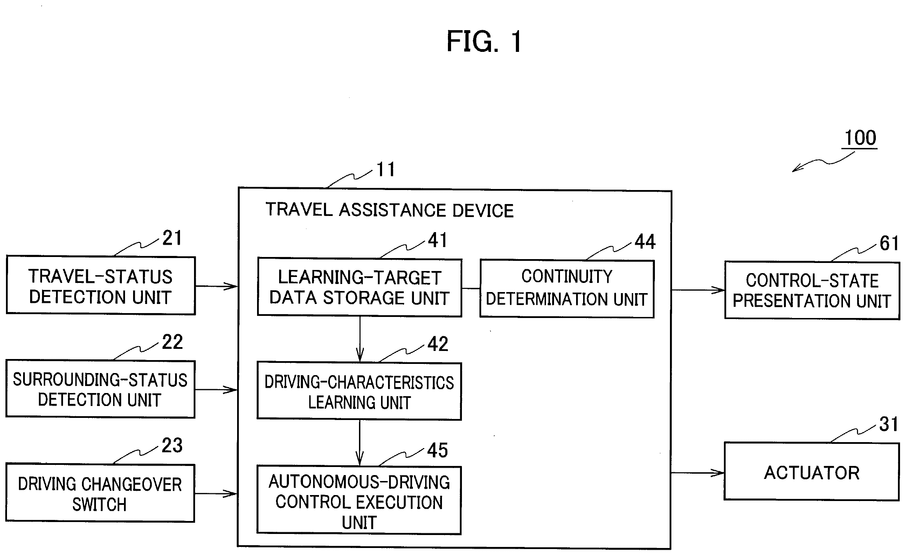

Fig. 1 is a block diagram illustrating a configuration of a driving control system 100 including a travel assistance device 11 according to the present embodiment. As illustrated in Fig. 1, the driving control system 100 according to the present embodiment includes the travel assistance device 11, a travel-status detection unit 21, a surrounding-status detection unit 22, a driving changeover switch 23, a control-state presentation unit 61, and an actuator 31.

The travel assistance device 11 is a controller that learns driving characteristics (learning of driving characteristics) based on predetermined learning target data, of pieces of travel data acquired during manual driving by a driver, in a vehicle capable of switching between manual driving by a driver and autonomous-driving, and performs processing to apply the learning result to travel control of autonomous-driving.

Further, in the present embodiment, a case where the travel assistance device 11 is mounted on a vehicle is described. However, a communication device can be installed in a vehicle and a part of the travel assistance device 11 can be installed in an external server so that the external server performs processing to learn driving characteristics of drivers. When the travel assistance device 11 is mounted on a vehicle, driving characteristics of a driver who owns or uses the vehicle can be learned. Pieces of learning target data during a predetermined period (for example, the latest one month) can be stored so as to be reflected in autonomous-driving of the vehicle owned or used by the driver. On the other hand, when the travel assistance device 11 is installed in an external server, since learning can be performed by using learning target data of the driver himself for a long period of time, a more stable learning result can be calculated. Further, when learning has not been completed yet, by utilizing pieces of learning target data of other drivers, driving characteristics of an average driver in the area can be reflected in autonomous-driving.

The travel-status detection unit 21 detects travel data indicating a travel state of a vehicle, such as a vehicle velocity and a steering angle, an acceleration rate, an inter-vehicular distance from a proceeding vehicle, a relative velocity with respect to the proceeding vehicle, a current position, a display state of a direction indicator, a lighting state of a headlight, and an operating condition of wipers. For example, as the travel-status detection unit 21, a sensor provided in a brake pedal or an accelerator pedal, a sensor that acquires the behavior of a vehicle such as a wheel sensor and a yaw-rate sensor, a laser radar, a camera, an in-vehicle network such as a CAN (Controller Area Network) that communicates data acquired from sensors thereof, and a navigation device are included.

The surrounding-status detection unit 22 detects environmental information representing an environment in which a vehicle is traveling, such as the number of lanes, a speed limit, a road grade, and a road curvature of a road on which the vehicle is traveling, a display state of a traffic light in front of the vehicle, a distance to an intersection in front of the vehicle, the number of vehicles that are traveling in front of the vehicle, an expected course at an intersection in front of the vehicle, and the presence of a temporary stop regulation. For example, a camera, a laser radar, and a navigation device mounted on a vehicle are included in the surrounding-status detection unit 22. The display state of a traffic light in front of the vehicle and the presence of a temporary stop regulation can be detected by using road-to-vehicle communication. The number of vehicles that are traveling in front of the vehicle can be detected by using a cloud service cooperated with vehicle-to-vehicle communication and a smartphone. The expected course at an intersection in front of the vehicle is acquired from the navigation device, a display state of the direction indicator, or the like. Further, the illuminance, temperature, and weather conditions around the vehicle are respectively acquired from an illuminance sensor, an outside temperature sensor, and a wiper switch. However, the illuminance can be acquired from a headlight switch.

The driving changeover switch 23 is a switch mounted on a vehicle to switch between autonomous-driving and manual driving, which is operated by an occupant of the vehicle. For example, it is a switch installed in a steering of the vehicle.

The control-state presentation unit 61 displays whether the current control state is manual driving or autonomous-driving on a meter display unit, a display screen of the navigation device, a head-up display, and the like. Further, the control-state presentation unit 61 outputs a notification sound informing start and end of autonomous-driving, and presents whether learning of driving characteristics has been completed.

The actuator 31 receives an execution command from the travel assistance device 11 to drive respective units such as an accelerator, a brake, and a steering of the vehicle.

Next, respective units constituting the travel assistance device 11 are described. The travel assistance device 11 includes a learning-target data storage unit 41, a driving-characteristics learning unit 42, a continuity determination unit 44, and an autonomous-driving control execution unit 45.

The learning-target data storage unit 41 acquires travel data relating to the travel state of a vehicle and pieces of environmental information relating to the travel environment around the vehicle from the travel-status detection unit 21, the surrounding-status detection unit 22, and the driving changeover switch 23, and stores therein predetermined data required for learning the driving characteristics of a driver in association with travel scenes such as the travel state and the travel environment of the vehicle.

The learning-target data storage unit 41 stores therein the predetermined learning target data required for learning the driving characteristics of a driver.

The start time and the end time of the learning target data are set by the continuity determination unit 44 described later.

New travel data and environmental information input to the learning-target data storage unit 41 from the travel-status detection unit 21, the surrounding-status detection unit 22, and the driving changeover switch 23 are temporarily stored in the learning-target data storage unit 41 for a period until the start time is set by the continuity determination unit 44, and are not handled as the learning target data. By setting the start time with respect to the travel data and the environmental information by the continuity determination unit 44, the travel data and the environmental information are handled as successive time-series data starting from the set start time, and the travel data and the environmental information are stored in the learning-target data storage unit 41 as "learning target data with only the start time being set".

Thereafter, when the end time is set by the continuity determination unit 44, the learning target data with the start time being set is handled as the successive time-series data from the set start time until the set end time, and is stored in the learning-target data storage unit 41 as "learning target data with both the start time and the end time being set".

The learning-target data storage unit 41 may store therein a deceleration timing during manual driving by a driver. The learning-target data storage unit 41 may store therein a deceleration timing in a case of stopping at a stop position such as a stop line set at an intersection or the like, a deceleration timing in a case of stopping behind a proceeding vehicle being stopping, or a deceleration timing in a case of traveling following the proceeding vehicle. Further, the learning-target data storage unit 41 may store therein the behavior of the vehicle at the time of operating the brake, such as a brake operating position, which is a position at which the brake is operated with respect to a stop position, a distance with respect to the stop position, a vehicle velocity at the time of operating the brake, and an acceleration rate.

The "deceleration timing" includes a timing when a driver operates the brake (a brake pedal) and the brake is operated at the time of stopping a vehicle at the stop position, a timing when deceleration actuates on the vehicle, a timing when an operation of the accelerator ends, or a timing when an operation of the brake pedal is started. Alternatively, the "deceleration timing" may include a timing when an operation amount of the brake pedal (depression amount) by a driver becomes equal to or larger than a predetermined amount set in advance, or a timing when an operation amount of the accelerator pedal (depression amount) by a driver becomes equal to or smaller than a predetermined amount set in advance. Alternatively, the "deceleration timing" may include a timing when a driver operates the brake and a control amount at the time of operating the brake has reached a certain value set in advance, or a timing when an increasing rate of the control amount at the time of operating the brake has reached a certain value.

That is, a timing when a control amount of the brake or an increasing rate of the control amount has reached a certain value, although not having reached the predetermined deceleration by the brake operation, may be set as the "deceleration timing". That is, the "deceleration timing" is a concept including a timing when the brake is operated (a brake start timing), an accelerator-off timing (a brake start timing), a timing when the control amount of the brake has reached a certain value, and a timing when the increasing rate of the control amount of the brake has reached a certain value. In other words, it is a timing when a driver feels a brake operation.

The brake in the present embodiment includes a hydraulic brake, an electronic control brake, and a regenerative brake. It can also include a deceleration actuating state even if the hydraulic brake, the electronic control brake, or the regenerative brake is not being operated.

Further, the learning-target data storage unit 41 may store therein an inter-vehicular distance between a vehicle and a proceeding vehicle during manual driving by a driver. The learning-target data storage unit 41 may store therein pieces of data other than the inter-vehicular distance such as an inter-vehicular distance during stop, a relative velocity with respect to the proceeding vehicle, a steering angle, a deceleration rate, and a duration time while following the proceeding vehicle.

Further, the learning-target data storage unit 41 may store therein a deceleration start speed when a vehicle stops at an intersection, a braking distance when a vehicle stops at an intersection, and the like. Further, the learning-target data storage unit 41 may store therein pieces of data such as an operation amount of the brake pedal and the accelerator pedal of a vehicle, a vehicle velocity and a deceleration rate, and a distance to a stop line at an intersection, during a deceleration operation.

The learning-target data storage unit 41 may store therein environmental information in which a vehicle is placed, other than these pieces of information. As the environmental information, the number of lanes, a road curvature, a speed limit, a road grade, and the presence of a temporary stop regulation of a road on which the vehicle is traveling, a display state of a traffic light, a distance from the vehicle to an intersection, the number of vehicles that are traveling in front of the vehicle, a display state of a direction indicator, the weather, temperature, or illuminance around the vehicle, and the like can be mentioned.

The driving-characteristics learning unit 42 reads learning target data stored in the learning-target data storage unit 41 and learns the driving characteristics of a driver corresponding to the learning target data, taking into consideration the travel state and the influence degree from the travel environment. The driving-characteristics learning unit 42 learns the driving characteristics for each of the learning target data based on the learning target data stored in the learning-target data storage unit 41.

Learning performed by the driving-characteristics learning unit 42 may be performed on a real time basis simultaneously at the time of storing the learning target data in the learning-target data storage unit 41. Alternatively, learning performed by the driving-characteristics learning unit 42 may be performed every predetermined time, or at a timing when a certain amount of learning target data has been accumulated in the learning-target data storage unit 41.

The learning target data to be used by the driving-characteristics learning unit 42 for learning of driving characteristics of a driver can include "learning target data with only the start time being set" and "learning target data with both the start time and the end time being set". While the driving-characteristics learning unit 42 is performing learning based on the "learning target data with only the start time being set", when the end time is set by the continuity determination unit 44 described later with respect to the relevant learning target data, the driving-characteristics learning unit 42 performs learning based on the data from the start time to the end time in the relevant learning target data. As a result, the driving-characteristics learning unit 42 performs learning based on the "learning target data with both the start time and the end time being set".

The continuity determination unit 44 sets the start time and the end time of data with respect to the travel data and the environmental information temporarily stored in the learning-target data storage unit 41. More specifically, the continuity determination unit 44 determines the continuity of the driving characteristics of a driver based on the presence of a switching event appearing in the travel data. The continuity determination unit 44 sets the start time and the end time of data so that travel data and environmental information before the switching event and travel data and environmental information after the switching event are handled as different pieces of learning target data.

The "switching event" includes, for example, startup or stop of the travel assistance device 11, setting, change, or cancellation of a navigation destination of the travel assistance device, and the like. Other than those operations, an occurrence of stoppage time of a vehicle more than a predetermined length of time, a change of the number of passengers in a vehicle, an occurrence of a variation equal to or larger than a predetermined value relating to driving characteristics, and the like are included in the "switching event".

Setting of the start time and the end time by the continuity determination unit 44 may be performed on a real time basis simultaneously with storage of the learning target data in the learning-target data storage unit 41 or learning performed by the driving-characteristics learning unit 42. Alternatively, setting of the start time and the end time by the continuity determination unit 44 may be performed every predetermined time, at a timing when a certain amount of learning target data has been accumulated in the learning-target data storage unit 41, or at a timing when a certain degree of accuracy of learning is realized in the learning performed by the driving-characteristics learning unit 42.

The autonomous-driving control execution unit 45 executes autonomous-driving control when a vehicle travels in an autonomous-driving section or when a driver selects autonomous-driving by the driving changeover switch 23. At this time, the autonomous-driving control execution unit 45 applies the learning result acquired by the driving-characteristics learning unit 42 to the travel control of autonomous-driving.

The travel assistance device 11 is constituted by a general-purpose electronic circuit including a microcomputer, a microprocessor, and a CPU, and peripheral devices such as a memory. The travel assistance device 11 operates as the learning-target data storage unit 41, the driving-characteristics learning unit 42, the continuity determination unit 44, and the autonomous-driving control execution unit 45 which are described above, by executing specific programs. The respective functions of the travel assistance device 11 can be implemented by one or a plurality of processing circuits. The processing circuit includes a programmed processing device such as a processing device including, for example, an electric circuit, and also includes an application specific integrated circuit (ASIC) arranged to execute the functions described in the embodiment and a device such as conventional circuit components.

### [Process procedure for generating learning target data]

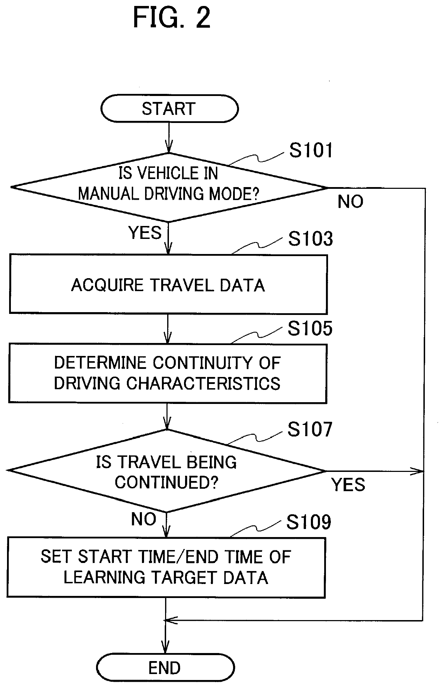

Next, a process procedure for generating learning target data by the travel assistance device 11 according to the present embodiment is described with reference to a flowchart in Fig. 2. The processing for generating learning target data illustrated in Fig. 2 is started when an ignition of a vehicle is turned on, and is repeatedly performed.

As illustrated in Fig. 2, first at Step S101, the travel assistance device 11 determines whether a vehicle is in a manual driving mode according to the state of the driving changeover switch 23. When the vehicle is in a manual driving mode, the process proceeds to Step S103, and when the vehicle is in an autonomous-driving mode, the travel assistance device 11 ends the processing for generating learning target data and executes autonomous-driving control.

At Step S103, the learning-target data storage unit 41 detects travel data relating to the travel state of the vehicle and environmental information relating to the travel environment around the vehicle from the travel-status detection unit 21, the surrounding-status detection unit 22, and the driving changeover switch 23. As the detected travel data, a vehicle velocity, a steering angle, an acceleration rate, a deceleration rate, an inter-vehicular distance from a proceeding vehicle, a relative velocity with respect to the proceeding vehicle, a current position, an expected course at an intersection in front of the vehicle, an operation amount of a brake pedal and an accelerator pedal, a duration time while following the proceeding vehicle, a lighting state of a headlight, an operating condition of wipers, and the like are detected. Further, the learning-target data storage unit 41 detects, as the environmental information, the number of lanes, a road curvature, a speed limit, a road grade, and the presence of a temporary stop regulation on a road on which the vehicle is traveling, a display state of a traffic light, a distance from the vehicle to an intersection, the number of vehicles that are traveling in front of the vehicle, a display state of a direction indicator, and the weather, temperature, or illuminance around the vehicle. Newly input travel data and environmental information are temporarily stored in the learning-target data storage unit 41.

Next, at Step S105, the continuity determination unit 44 determines the continuity of the driving characteristics of a driver based on the presence of a switching event appearing in the travel data.

When it is determined that the driving characteristics are continuous (YES at Step S107), the process ends. Thereafter, the flowchart in Fig. 2 is started from the beginning, and thus acquisition of the travel data is continued.

As a result of determination, when it is determined that the driving characteristics are not continuous (the continuity is lost) (NO at Step S107), the process proceeds to Step S109, and the continuity determination unit 44 sets the start time and the end time of data with respect to the travel data and the environmental information temporarily stored in the learning-target data storage unit 41.

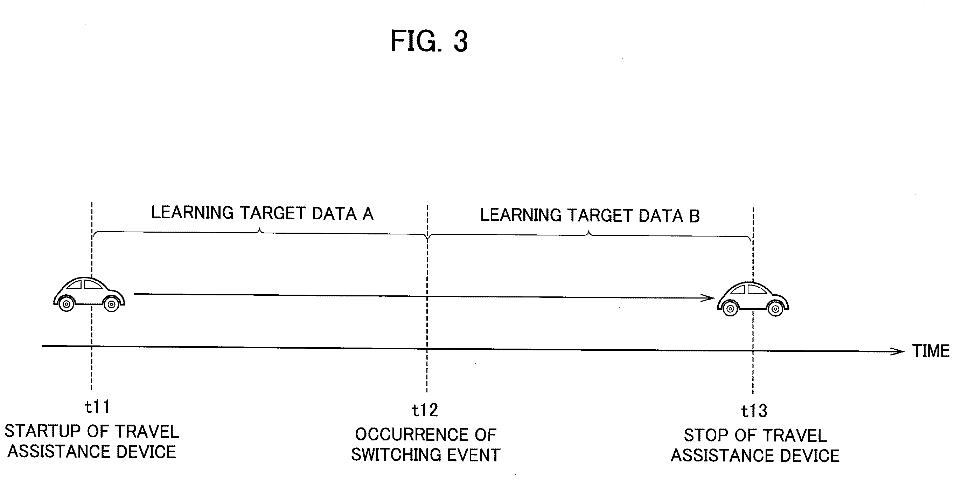

The relation between the learning target data and the switching event, and processes at Steps S105, S107, and S109 are described more specifically with reference to Figs. 3 to 6.

Fig. 3 illustrates a case where the travel assistance device 11 starts up at a timing t11 and stops at a timing t13. The continuity determination unit 44 detects a switching event timing t12 appearing in the travel data, and determines that the continuity of the driving characteristics is lost before and after the relevant switching event.

In this case, the continuity determination unit 44 sets the time of the timing t12 as the end time with respect to learning target data A having the travel data immediately before the switching event, and sets the time of the timing t12 as the start time with respect to travel data immediately after the switching event. As a result, the travel data immediately after the switching event becomes learning target data B.

Therefore, the learning target data A and the learning target data B are handled as two different pieces of learning target data that are not continuous. That is, the travel data is divided into two pieces of data, that is, the learning target data A and the learning target data B, at the switching event timing t12.

As the switching event assumed in Fig. 3, setting, change, or cancellation of a navigation destination of the travel assistance device are mentioned. At a timing when setting, change, or cancellation of a navigation destination of the travel assistance device is performed by a driver, it is considered that the feeling or travel intention of the driver has changed, and that a difference tends to appear in the driving characteristics of the driver before and after such a timing. If a driver suddenly sets, changes, or cancels the destination, for example, by recalling that the driver needs to go shopping urgently during manual driving, it is considered that calm driving characteristics change to rushed driving characteristics.

Further, the continuity determination unit 44 detects a startup timing t11 of the travel assistance device 11 as a kind of switching events, and determines that the continuity of the driving characteristics is lost before and after the startup timing of the travel assistance device 11. In this case, the continuity determination unit 44 sets the startup timing t11 as the start time. The process is a process required for generating the learning target data A.

Further, the continuity determination unit 44 detects an end timing t13 of the travel assistance device 11 as a kind of switching events, and determines that the continuity of the driving characteristics is lost before and after the stop timing of the travel assistance device 11. In this case, the continuity determination unit 44 sets the end timing t13 as the end time of the learning target data B.

As illustrated in Fig. 3, as a case where the continuity of the driving characteristics is lost at the startup timing and the stop timing of the travel assistance device 11, for example, such a case can be considered that a driver goes home, has some rest at home, and then leaves home again.

In such a case, before the stop timing of the travel assistance device 11, the driver was in a tired state. However, at the time of next driving after having a rest at home, at the startup timing of the travel assistance device 11, it is considered that the driver is in a refreshed state. Since the feelings and the fatigue degree of the driver change, it is considered that the driving characteristics also change, and as a result, it is considered that the continuity of the driving characteristics is lost. Therefore, the continuity determination unit 44 detects the startup or stop timing of the travel assistance device 11 as a kind of switching events, and determines that the continuity of the driving characteristics is lost before and after these timings.

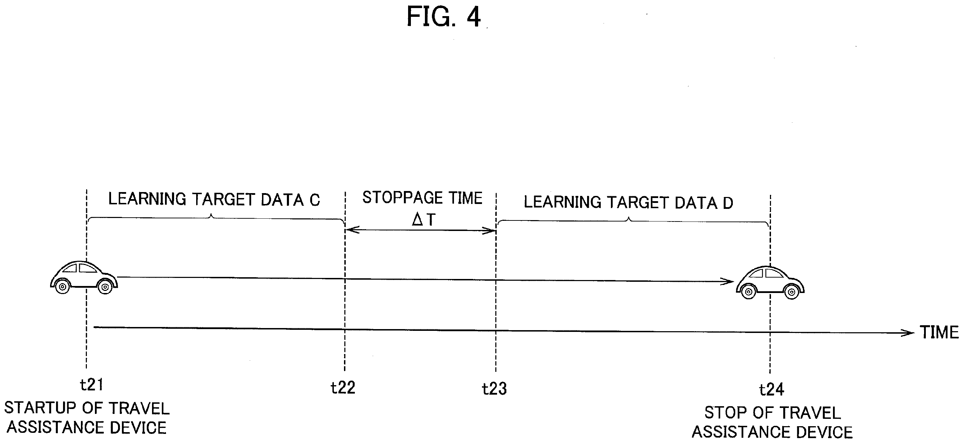

Further, as illustrated in Fig. 4, the continuity determination unit 44 detects a stoppage time ΔT appearing in the travel data, and determines whether the stoppage time ΔT has a length equal to or longer than a predetermined length. When it is determined that the stoppage time ΔT has a length equal to or longer than the predetermined length, the continuity determination unit 44 detects the stoppage time ΔT as a kind of switching events, and determines that the continuity of the driving characteristics is lost before and after the relevant switching event.

Other than this, when the number of passengers change before and after the stoppage time ΔT regardless of the length of the stoppage time ΔT, the continuity determination unit 44 detects the stoppage time ΔT as a kind of switching events, and determines that the continuity of the driving characteristics is lost before and after the relevant switching event.

In the above case, the continuity determination unit 44 sets a time of a timing t22 as the end time with respect to the learning target data C having the travel data immediately before the stoppage time ΔT, and sets a time of a timing t23 as the start time with respect to the travel data immediately after the stoppage time ΔT. As a result, the travel data immediately after the switching event becomes learning target data D.

Therefore, the learning target data C and the learning target data D are handled as two different pieces of learning target data that are not continuous. That is, the travel data is divided into the two pieces of data, that is, the learning target data C and the learning target data D at the stoppage time ΔT.

As illustrated in Fig. 4, as the case where the continuity of the driving characteristics is lost before and after the stoppage time of a vehicle, for example, such a case can be considered that when a driver traveling an expressway stops in a service area and takes a nap, the driver does not switch off the engine and stops for a long time in order to operate an air conditioner. Different from a case where a driver drops by temporarily and stops for shopping (for example, drop-by for shopping in a convenience store), it is considered that the feelings and the fatigue degree of the driver change before and after such a long stoppage time. Therefore, the continuity determination unit 44 detects the stoppage time equal to or longer than a predetermined time as a kind of switching events, and determines that the continuity of the driving characteristics is lost before and after the relevant stoppage time.

Further, when the number of passengers change before and after the stoppage time, it is considered that the driving characteristics of a driver change due to an influence of the passenger. Therefore, when the number of passengers change before and after the stoppage time, the continuity determination unit 44 determines that the continuity of the driving characteristics is lost before and after the stoppage time.

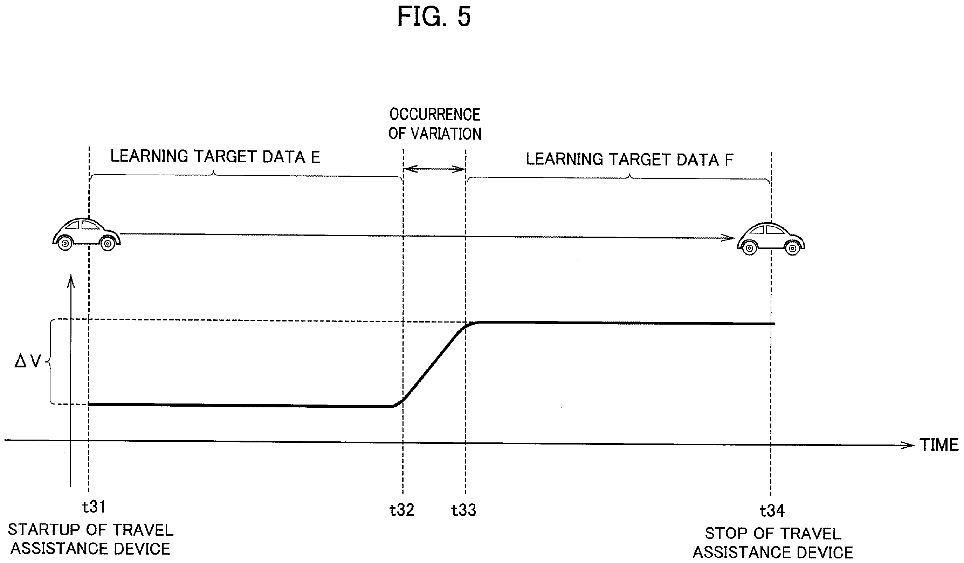

As illustrated in Fig. 5, the continuity determination unit 44 detects an occurrence of a variation ΔV having a magnitude equal to or larger than a predetermined value relating to the driving characteristics, to determine whether the magnitude of the variation ΔV is equal to or larger than the predetermined value. When determining that the magnitude of the variation ΔV is equal to or larger than the predetermined value, the continuity determination unit 44 detects the occurrence of the variation ΔV as a kind of switching events, and determines that the continuity of the driving characteristics is lost before and after the relevant switching event.

In this case, the continuity determination unit 44 sets a time of a timing t32 as the end time with respect to learning target data E having the travel data immediately before the occurrence of the variation, and sets a time of a timing t33 as the start time with respect to the travel data immediately after the occurrence of the variation. As a result, the travel data immediately after the switching event becomes learning target data F.

Therefore, the learning target data E and the learning target data F are handled as two different pieces of learning target data that are not continuous. That is, the travel data is divided into the two pieces of data, that is, the learning target data E and the learning target data F at the occurrence of the variation.

As the driving characteristics assumed in Fig. 5, an inter-vehicular distance between a vehicle and a proceeding vehicle, a braking deceleration rate of the vehicle, a starting acceleration rate of the vehicle, and the like are mentioned. These amount changes from moment to moment with traveling of the vehicle. However, when a time average of respective amounts is calculated, for example, focusing on the travel data during a deceleration operation, the relevant average tends to converge to a predetermined value depending on the feelings and the fatigue degree of the driver. Further, when a regression analysis (a multiple regression analysis) is performed, designating these amounts as an objective variable and the vehicle velocity as an explanatory variable, there is a tendency of following a predetermined regression model depending on the feelings and the fatigue degree of the driver. That is, the driving characteristics of the driver appear in the inter-vehicular distance from the proceeding vehicle, the braking deceleration rate of the vehicle, and the starting acceleration rate of the vehicle.

When variations having a magnitude equal to or larger than a predetermined value occur in the time average of respective amounts of the inter-vehicular distance from the proceeding vehicle, the braking deceleration rate of the vehicle, and the starting acceleration rate of the vehicle, or a value acquired by performing the regression analysis, the feelings and the fatigue degree of the driver may change before and after the occurrence of the variations. Therefore, the continuity determination unit 44 detects an occurrence of such a variation ΔV as a kind of switching events, and determines that the continuity of the driving characteristics is lost before and after the relevant switching event.

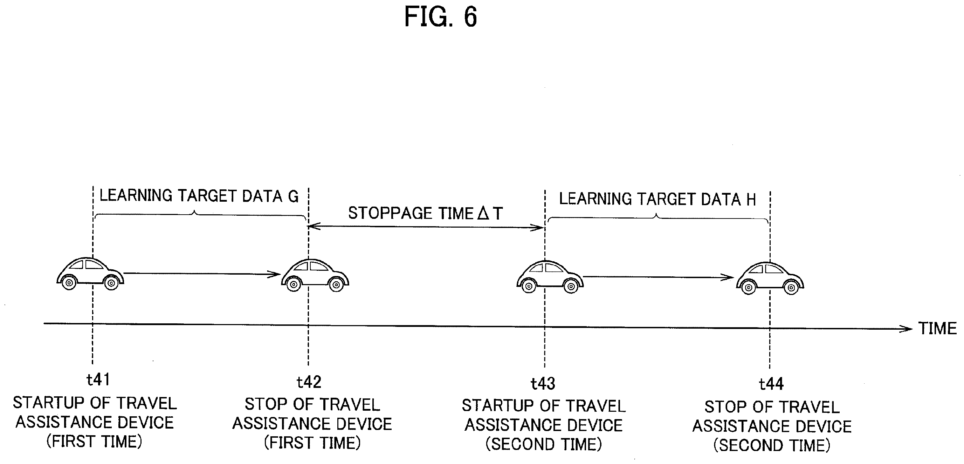

In the above descriptions, a case where the travel data is divided into a plurality of pieces of learning target data has been described with reference to Figs. 3 to 5. Next, a case where two different pieces of learning target data that are not continuous are handled as one piece of continuous learning target data is described with reference to Fig. 6.

Fig. 6 illustrates a case where after the travel assistance device 11 starts up at a timing t41 and stops at a timing t42, starts up again at a timing t43 and stops at a timing t43.

When compared with the above case illustrated in Fig. 3, since there is no switching event in a period from the timing t41 to the timing t42, the travel data acquired during a period from the timing t41 to the timing t42 is handled as learning target data G. Further, since there is no switching event in a period from the timing t43 to the timing t44, the travel data acquired during a period from the timing t43 to the timing t44 is handled as learning target data H.

As illustrated in Fig. 3, according to a method of setting the startup timing and the stop timing of the travel assistance device 11 respectively as the start time and the end time of the learning target data, the learning target data G and the learning target data H are handled as the two different pieces of learning target data that are not continuous.

However, when the stop time (the stoppage time ΔT) of the travel assistance device 11 between the timing t42 and the timing t43 is short, there is sometimes a case where it is better to handle the learning target data G and the learning target data H as one piece of continuous learning target data.

For example, at the time of temporary drop-by for shopping, if an ignition of a vehicle is temporarily turned off, the travel assistance device 11 stops and the travel assistance device 11 starts after the shopping. In this case, when the stop time of the travel assistance device 11 is shorter than a predetermined length of time, it is considered that the feelings and the fatigue degree of the driver do not change much. Therefore, it is considered that the driving characteristics of the driver do not change largely before and after the stop time of the travel assistance device 11.

Therefore, when the stop time of the travel assistance device 11 is short, the continuity determination unit 44 does not set the timing t42 as the end time with respect to the learning target data G. Further, the continuity determination unit 44 does not set the timing t43 as the start time with respect to the learning target data H. As a result, the learning target data G and the learning target data H are handled as one piece of continuous learning target data. That is, the pieces of travel data before and after the stoppage time, being the stop time of the travel assistance device 11, are integrated as one piece of continuous learning target data.

Other than this case, when the same navigation destination is set before and after the stop time (the stoppage time ΔT) of the travel assistance device 11 illustrated in Fig. 6, there is sometimes a case where it is better to handle the learning target data G and the learning target data H as one piece of continuous learning target data, regardless of the length of the stoppage time ΔT.

If the navigation destination set at the timing t42 and the navigation destination set at the timing t43 in Fig. 6 are the same, it is considered that the feelings and the fatigue degree of the driver do not change before and after the stop time of the travel assistance device 11.

Therefore, in such a case, the continuity determination unit 44 does not set the timing t42 as the end time with respect to the learning target data G. Further, the continuity determination unit 44 does not set the timing t43 as the start time with respect to the learning target data H. As a result, the learning target data G and the learning target data H are handled as one piece of continuous learning target data. That is, the travel data before and after the stoppage time, being the stop time of the travel assistance device 11, are integrated as one piece of continuous learning target data.

On the contrary, if the navigation destination set at the timing t42 and the navigation destination set at the timing t43 in Fig. 6 are different, it is considered that the feelings and the fatigue degree of the driver change before and after the stop time of the travel assistance device 11, and the driving characteristics of the driver also change. Therefore, the continuity determination unit 44 sets the timing t42 as the end time with respect to the learning target data G, and sets the timing t43 as the start time with respect to the learning target data H.

As described above, the travel assistance device 11 according to the present embodiment generates the learning target data separated by a switching event.

Although not illustrated in the flowchart in Fig. 2, the driving-characteristics learning unit 42 learns the driving characteristics of a driver corresponding to the learning target data, based on the learning target data acquired by the processing described above, taking into consideration the influence degree from the travel state and the travel environment. A learning result acquired based on the learning target data is stored in the driving-characteristics learning unit 42.

The driving-characteristics learning unit 42 performs the regression analysis and non-parametric estimation based on the pieces of data included in the learning target data to perform learning of the driving characteristics. Further, the driving-characteristics learning unit 42 may perform learning of the driving characteristics by calculating an output error at the time of inputting training data to a neural network and adjusting various parameters of the neural network so that the error becomes minimum, as in the deep learning (hierarchical learning, machine learning) using the neural network.

Thereafter, the learning result acquired by the processing described above is read by the autonomous-driving control execution unit 45 when a user of the travel assistance device 11 selects autonomous-driving. The autonomous-driving control execution unit 45 applies the read learning result to the travel control of autonomous-driving.

### [Effects of embodiments]

As described above in detail, in the method for learning travel characteristics according to the present embodiment, the continuity of the driving characteristics is determined based on travel data during manual driving by a driver, and a start time and an end time of learning target data, being a learning target of the driving characteristics of the travel data are set by using a determination result of the continuity, thereby generating learning target data. Accordingly, it can be avoided that two pieces of learning target data being present before and after the timing at which it is considered that the driving characteristics have changed are erroneously handled as one piece of continuous learning target data. As a result, it can be prevented that the learning accuracy decreases due to a change of the driving characteristics in one piece of continuous learning target data.

Further, since highly accurate learning is performed separately based on two pieces of learning target data before and after the timing at which it is considered that the driving characteristics have changed, when the learning result acquired by the relevant learning is applied to control of autonomous-driving, the learning accuracy is improved and a sense of discomfort felt by an occupant of a vehicle can be suppressed. Particularly, according to an analysis result based on behavior data, by setting an appropriate start time and an appropriate end time of the learning target data by determining the continuity of the driving characteristics, improvement of the learning accuracy has succeeded in learning of the driving characteristics of about 70 percent of drivers.

Further, the method for learning travel characteristics according to the present embodiment may set a startup timing of the travel assistance device as a start time of the learning target data or set a stop timing of the travel assistance device as an end time of the learning target data. Accordingly, a timing at which it is considered that the driving characteristics change can be set as the start time or the end time of the learning target data, and as a result, learning target data in which the driving characteristics do not vary largely can be acquired.

Further, the method for learning travel characteristics according to the present embodiment may set a timing of setting, change, or cancellation of a navigation destination of the travel assistance device as an end time of learning target data indicating the driving characteristics before the relevant timing, and as a start time of learning target data indicating the driving characteristics after the relevant timing.

Accordingly, a timing at which the driving characteristics are considered to change can be set as a start time or an end time of learning target data, and as a result, learning target data in which the driving characteristics do not vary largely can be acquired. Particularly, since a timing at which the feeling or travel intention of a driver changes during manual driving can be detected accurately based on an operation of the driver with respect to the travel assistance device, more appropriate learning target data can be generated.

Further, the method for learning travel characteristics according to the present embodiment may set a start timing of a stoppage time as an end time of learning target data indicating the driving characteristics before the stoppage time, and set an end timing of the stoppage time as a start time of learning target data indicating the driving characteristics after the stoppage time, when a length of the stoppage time of the vehicle is equal to or longer than a predetermined threshold. Accordingly, a timing at which it is considered that the driving characteristics change can be set as a start time or an end time of learning target data, and as a result, learning target data in which the driving characteristics do not vary largely can be acquired.

Further, when the travel assistance device stops and thereafter, the travel assistance device starts up and a length of time from the stop to startup thereafter of the travel assistance device is equal to or longer than a predetermined value, the method for learning travel characteristics according to the present embodiment may set a stop timing of the travel assistance device as an end time of learning target data indicating the driving characteristics before the relevant stop timing, and set a startup timing of the travel assistance device after the relevant end timing as a start time of learning target data indicating the driving characteristics after the relevant startup timing.

Accordingly, a timing at which it is considered that the driving characteristics change can be set as a start time or an end time of learning target data, and as a result, learning target data in which the driving characteristics do not vary largely can be acquired.

When a length of time after the travel assistance device stops until the travel assistance device starts up again is shorter than a predetermined value, the stop timing and the startup timing of the travel assistance device are not set as the end time and the start time of learning target data. Therefore, it can be suppressed that the learning target data having the continuity of driving characteristics is divided into a plurality of pieces of data by a temporary stop period of the travel assistance device. As a result, more accurate learning can be performed based on learning target data for a longer time period.

Further, in the method for learning travel characteristics according to the present embodiment, when the travel assistance device stops and thereafter starts up again, and when a navigation destination set at the stop timing of the travel assistance device and a navigation destination set at the startup timing of the travel assistance device are different from each other, the stop timing of the travel assistance device may be set as an end time of learning target data indicating the driving characteristics before the relevant stop timing, and the startup timing of the travel assistance device after the relevant stop timing may be set as a start time of learning target data indicating the driving characteristics after the relevant startup timing.

Accordingly, a timing at which it is considered that the driving characteristics change can be set as a start time or an end time of learning target data, and as a result, learning target data in which the driving characteristics do not vary largely can be acquired.

Further, when the navigation destinations are the same at the stop timing of the travel assistance device and at the startup timing thereafter of the travel assistance device, the stop timing and the startup timing of the travel assistance device are not set as the end time and the start time of learning target data. Therefore, it can be avoided that the learning target data having the continuity of driving characteristics is divided into a plurality of pieces of data by a temporary stop period of the travel assistance device. As a result, more accurate learning can be performed based on learning target data for a longer time period.

Further, according to the method for learning travel characteristics according to the present embodiment, when the number of passengers changes before and after a stoppage time of the vehicle, a start timing of the stoppage time can be set as an end time of learning target data indicating the driving characteristics before the stoppage time, and an end timing of the stoppage time can be set as a start time of learning target data indicating the driving characteristics after the stoppage time.

Accordingly, a timing at which it is considered that the driving characteristics change can be set as a start time or an end time of learning target data, and as a result, learning target data in which the driving characteristics do not vary largely can be acquired.

Further, according to the method for learning travel characteristics according to the present embodiment, when a magnitude of variation of the driving characteristics in the travel data being learned is equal to or larger than a predetermined value, a timing of the variation may be set as an end time of learning target data indicating the driving characteristics before an occurrence of the variation, and the timing of the variation may be set as a start time of learning target data indicating the driving characteristics after the occurrence of the variation.

Accordingly, a timing at which the driving characteristics change can be set as a start time or an end time of learning target data, and as a result, learning target data in which the driving characteristics do not vary largely can be acquired.

In the above descriptions, as the driving characteristics to be used for detection of a variation timing, an inter-vehicular distance between a vehicle and a proceeding vehicle, a braking deceleration rate of the vehicle, a starting acceleration rate of the vehicle, or a combination thereof can be used. As a result, the variation timing is detected by using an amount in which the driving characteristics of the driver tend to appear. Therefore, a timing at which the driving characteristics change can be set more accurately as the start time or the end time of learning target data. As result, learning target data in which the driving characteristics do not vary largely can be acquired.

Although the contents of the present invention have been described above with reference to the embodiments, the present invention is not limited to these descriptions, and it will be apparent to those skilled in the art that various modifications and improvements can be made. It should not be construed that the present invention is limited to the descriptions and the drawings that constitute a part of the present disclosure. On the basis of the present disclosure, various alternative embodiments, practical examples, and operating techniques will be apparent to those skilled in the art.

In is needless to mention that the present invention also includes various embodiments that are not described herein. Therefore, the technical scope of the present invention is to be defined only by the invention specifying matters according to the scope of claims appropriately obtained from the above descriptions.

Respective functions described in the above respective embodiments may be implemented on one or more processing circuits. The processing circuits include programmed processors such as processing devices and the like including electric circuits. The processing devices include devices such as application specific integrated circuits (ASIC) and conventional circuit constituent elements that are arranged to execute the functions described in the embodiments.

### REFERENCE SIGNS LIST

- 11: travel assistance device
- 21: travel-status detection unit
- 22: surrounding-status detection unit
- 23: driving changeover switch
- 31: actuator
- 41: learning-target data storage unit
- 42: driving-characteristics learning unit
- 44: continuity determination unit
- 45: autonomous-driving control execution unit
- 61: control-state presentation unit

## Claims

1. A method for learning travel characteristics of a travel assistance device that learns driving characteristics of a driver from travel data during manual driving by a driver and applies a learning result to travel control of autonomous-driving, in a vehicle capable of switching manual driving by a driver and autonomous-driving, the method comprising:
determining continuity of the driving characteristics based on the travel data and setting a start time and an end time of learning target data, being a learning target of the driving characteristics of the travel data, by using a determination result of the continuity.

2. The method for learning travel characteristics according to claim 1, further comprising, while designating a startup timing of the travel assistance device as a first timing, setting the first timing as a start time of the learning target data.

3. The method for learning travel characteristics according to claim 1 or 2, further comprising, while designating a stop timing of the travel assistance device as a second timing, setting the second timing as an end time of the learning target data.

4. The method for learning travel characteristics according to any one of claims 1 to 3, further comprising:
while designating a timing of setting, change, or cancellation of a navigation destination of the travel assistance device as a third timing,
setting the third timing as an end time of learning target data indicating the driving characteristics before the third timing; and
setting the third timing as a start time of learning target data indicating the driving characteristics after the third timing.

5. The method for learning travel characteristics according to any one of claims 1 to 4, further comprising:
when a length of a stoppage time of the vehicle is equal to or longer than a first threshold,
setting a start timing of the stoppage time as an end time of learning target data indicating the driving characteristics before the stoppage time; and
setting an end timing of the stoppage time as a start time of learning target data indicating the driving characteristics after the stoppage time.

6. The method for learning travel characteristics according to any one of claims 1 to 5, further comprising:
while designating a stop timing of the travel assistance device as a fourth timing and
designating a startup timing of the travel assistance device after the fourth timing as a fifth timing, and
when a length of time from the fourth timing to the fifth timing is equal to or longer than a second threshold,
setting the fourth timing as an end time of learning target data indicating the driving characteristics before the fourth timing; and
setting the fifth timing as a start time of learning target data indicating the driving characteristics after the fifth timing.

7. The method for learning travel characteristics according to any one of claims 1 to 6, further comprising:
while designating a stop timing of the travel assistance device as a sixth timing and
designating a startup timing of the travel assistance device after the sixth timing as a seventh timing, and
when a navigation destination set at the sixth timing is different from a navigation destination set at the seventh timing,
setting the sixth timing as an end time of learning target data indicating the driving characteristics before the sixth timing; and
setting the seventh timing as a start time of learning target data indicating the driving characteristics after the seventh timing.

8. The method for learning travel characteristics according to any one of claims 1 to 7, further comprising:
when number of passengers changes before and after a stoppage time of the vehicle,
setting a start timing of the stoppage time as an end time of learning target data indicating the driving characteristics before the stoppage time; and
setting an end timing of the stoppage time as a start time of learning target data indicating the driving characteristics after the stoppage time.

9. The method for learning travel characteristics according to any one of claims 1 to 8, further comprising:
when a magnitude of variation of the driving characteristics in the travel data being learned is equal to or larger than a third threshold,
setting a timing of the variation as an end time of learning target data indicating the driving characteristics before an occurrence of the variation; and
setting the timing of the variation as a start time of learning target data indicating the driving characteristics after an occurrence of the variation.

10. The method for learning travel characteristics according to claim 9, wherein the travel characteristics are an inter-vehicular distance between the vehicle and a proceeding vehicle.

11. The method for learning travel characteristics according to claim 9 or 10, wherein the travel characteristics are a braking deceleration rate of the vehicle.

12. The method for learning travel characteristics according to any one of claims 9 to 11, wherein the travel characteristics are a starting acceleration rate of the vehicle.

13. A travel assistance device that learns driving characteristics of a driver from travel data during manual driving by a driver and applies a learning result to travel control of autonomous-driving, in a vehicle capable of switching manual driving by a driver and autonomous-driving, the travel assistance device comprising:
a continuity determination unit that determines continuity of the driving characteristics based on the travel data and sets a start time and an end time of learning target data, being a learning target of the driving characteristics of the travel data, by using a determination result of the continuity.
